# EUROPÄISCHE PATENTANMELDUNG

(11) **EP 1 666 321 A1**
(43) Veröffentlichungstag der Anmeldung: **07.06.2006**
(21) Anmeldenummer: 04106321.5
(22) Anmeldetag: 06.12.2004
(51) Int. Cl.: B60T 1/10, B60T 13/58

(54) **Verfahren zum Bremsen eines Fahrzeugs, Bremsvorrichtung und Fahrzeug mit einer Bremsvorrichtung**

(71) Anmelder: Ford Global Technologies, LLC, A subsidary of Ford Motor Company, Dearborn, MI 48126 (US)
(72) Erfinder: Eifert, Mark, 52070, Aachen (DE); Leyten, Max Johan Adriaan, 6291 EM, Vaals (NL)
(74) Vertreter: Drömer, Hans-Carsten

(57) **Zusammenfassung**

Ein erfindungsgemäßes Verfahren zum Bremsen eines Fahrzeuges, welches mit einem Fahrzeugmotor (1) und einem mit dem Fahrzeugmotor (1) zum Umwandeln eines Teils der Motorleistung in elektrische Leistung in Verbindung stehenden steuerbaren Fahrzeuggenerator (3) ausgestattet ist, bei einer Gefällefahrt umfaßt die Schritte:
- Prüfen, ob eine Gefällefahrt stattfindet;
- Ermitteln einer Stellgröße für den Fahrzeuggenerator (3), die geeignet ist, den Fahrzeuggenerator (3) in einen Betriebszustand zu versetzen, welcher bei dem mit dem Fahrzeuggenerator (3) in Verbindung stehenden Fahrzeugmotor (1) zu einem Betriebszustand mit einer konstanten Motordrehzahl führt, wenn die Prüfung ergibt, daß eine Gefällefahrt stattfindet; und
- Ausgeben der ermittelten Stellgröße an den Fahrzeuggenerator (3).

## Beschreibung

Die vorliegende Erfindung betrifft ein Verfahren zum Bremsen eines Fahrzeuges, welches mit einem Fahrzeugmotor und einem mit dem Fahrzeugmotor zum Umwandeln eines Teils der Motorleistung in elektrische Leistung in Verbindung stehenden steuerbaren Fahrzeuggenerator ausgestattet ist, bei Gefällefahrten. Außerdem betrifft die Erfindung eine Bremsvorrichtung sowie ein mit einer Bremsvorrichtung ausgestattetes Fahrzeug.

Vorrichtungen zum Bremsen sind heutzutage in vielen Fahrzeugen Standard. Bei Nutzfahrzeugen sind beispielsweise so genannte Dauer-Bremsanlagen bekannt, welche insbesondere bei Gefällefahrten zum Einsatz kommen. Eine derartige Dauer-Bremslange ist in DE 36 02 312 A1 beschrieben. Diese Dauer-Bremsanlage ist als elektrische Bremse, auch elektrischer Retarder genannt, ausgeführt, in der Wirbelströme dazu genutzt werden, ein Bremsmoment zu generieren. In Personenfahrzeugen kommen derartige Dauer-Bremsanlagen in der Regel jedoch nicht zur Anwendung, da der zum Einbau benötigte Bauraum häufig nicht zur Verfügung steht.

Der Abstieg von steilen Bergpässen, beispielsweise in der Schweiz, in Österreich oder in Italien, führt jedoch auch bei Personenfahrzeugen zu extremen Situationen für den Fahrzeugmotor sowie den Fahrer des Fahrzeugs. Bremsen mit Hilfe des Schleppmoments des Fahrzeugmotors verschlechtert oft den Fahrkomfort aufgrund erhöhter Innenraumgeräusche, die aus der hohen Motordrehzahl resultieren. Wenn das Schleppmoment des Motors nicht ausreicht, das Fahrzeug im gewählten Gang abzubremsen, muß der Fahrer zudem herunterschalten, um das an den Reifen verfügbare Bremsmoment durch erhöhen der Motordrehzahl zu vergrößern. Dies erhöht das Innenraumgeräusch weiter. Wenn der Abstieg sehr steil verläuft - bis zu 20% ist bei Gebirgspässen keine Seltenheit - ist das Bremsen mit Hilfe des Schleppmoments des Fahrzeugmotors außerdem nicht ausreichend. Als Konsequenz muß die Friktionsbremse (Reibungsbremse) des Fahrzeugs zur Anwendung kommen, um die Fahrzeuggeschwindigkeit zumindest konstant zu halten. Dies führt zu übermäßigem Abrieb an Bremsscheibe und Bremsbelag. In extremen Fällen kann zudem eine Überhitzung auftreten, welche zu einem Schwund der Bremskraft und somit zu einer gefährlichen Situation führen kann.

Es ist daher eine Aufgabe der vorliegenden Erfindung, ein neues Verfahren zum Bremsen eines Fahrzeuges bei einer Gefällefahrt zur Verfügung zu stellen.

Außerdem ist es eine Aufgabe der vorliegenden Erfindung, eine vorteilhafte Bremsvorrichtung für ein Fahrzeug sowie ein Fahrzeug mit einer vorteilhaften Bremsvorrichtung zur Verfügung zu stellen.

Die erste Aufgabe wird durch ein Verfahren zum Bremsen eines Fahrzeugs bei einer Gefällefahrt nach Anspruch 1, die zweite Aufgabe durch eine Bremsvorrichtung nach Anspruch 9 bzw. ein Fahrzeug nach Anspruch 12 gelöst. Die abhängigen Ansprüche enthalten vorteilhaft Ausgestaltungen der Erfindung.

Erfindungsgemäß wird ein Verfahren zum Bremsen eines Fahrzeuges, welches mit einem Fahrzeugmotor und einem mit dem Fahrzeugmotor zum Umwandeln eines Teils der Motorleistung in elektrische Leistung in Verbindung stehenden steuerbaren Fahrzeuggenerator ausgestattet ist, bei einer Gefällefahrt zur Verfügung gestellt. Das erfindungsgemäße Verfahren umfaßt die Schritte:
- Prüfen, ob eine Gefällefahrt stattfindet;
- Ermitteln einer Stellgröße für den Fahrzeuggenerator, die geeignet ist, den Generator in einen Betriebszustand zu versetzen, welcher bei dem mit dem Fahrzeuggenerator in Verbindung stehenden Motor zu einem Betriebszustand mit einer konstanten Motordrehzahl führt, wenn die Prüfung ergibt, daß eine Gefällefahrt stattfindet, und
- Ausgeben der ermittelten Stellgröße an den Fahrzeuggenerator.

Die konstante Motordrehzahl führt dabei dazu, daß das Fahrzeug eine Gefällefahrt mit einer konstanten Geschwindigkeit ausführt. Dadurch wird der Fahrkomfort erhöht, die Notwendigkeit des Gebrauchs der Reibungsbremse verringert und die Fahrsicherheit erhöht. Ein Einbau einer zusätzlichen, Platz beanspruchenden Bremsvorrichtung, etwa eines Retarders, ist dabei nicht nötig, da die Bremswirkung vom sowieso vorhandenen Generator zur Verfügung gestellt wird. Zudem kann der Generator in dem Betriebszustand, in dem die Motordrehzahl konstant gehalten wird, zum Umwandeln eines großen Teils der Motorleistung in elektrische Leistung verwendet werden. Dies reduziert zum einen den Kühlbedarf und ermöglicht zum anderen das Aufladen der Fahrzeugbatterie.

Als Fahrzeuggenerator kommen konventionelle Generatoren, integrierte Startergeneratoren oder sogar elektrische Traktionsmotoren in Betracht.

In einem Fahrzeug, welches mit wenigstens einem zum Erfassen eines zur Identifikation einer Gefällefahrt geeigneten Fahrzeugparameters ausgebildeten Fahrzeugparametersensor ausgestattet ist, kann die Prüfung, ob eine Gefällefahrt stattfindet, durch eine Prüfung dahingehend erfolgen, ob der von dem wenigstens einen Fahrzeugparametersensor erfaßte Fahrzeugparameter zu einer Identifikation einer Gefällefahrt führt. Dazu sind verschiedene Fahrzeugparameter geeignet. Beispielsweise könnte ein Neigungssensor in ein Fahrzeug integriert werden, anhand dessen eine Gefällefahrt festgestellt werden kann. Das Feststellen einer Gefällefahrt braucht aber nicht anhand eines einzigen Fahrzeugparameters zu erfolgen, es kann auch eine Kombination von mehreren Fahrzeugparametern zum Feststellen einer Gefällefahrt Verwendung finden.
In einer vorteilhaften Ausgestaltung des erfindungsgemäßen Verfahrens finden zum Feststellen einer Gefällefahrt einer oder mehrere der folgenden Fahrzeugparameter einzeln oder in Kombination Verwendung; Fahrzeuggeschwindigkeit, Motordrehzahl, Drosselklappenstellung, Bremspedalstellung, Getriebeübersetzung. Die genannten Fahrzeugparameter stehen in der Regel in modernen Fahrzeugen sowieso zur Verfügung, so daß zum Durchführen des erfindungsgemäßen Verfahrens keine zusätzlichen Sensoren in ein Fahrzeug einzubauen sind.

In einer vorteilhaften Ausgestaltung des erfindungsgemäßen Verfahrens erfolgt das Prüfen, ob eine Gefällefahrt stattfindet, wiederholt. Wenn die Prüfung ergibt, daß keine Gefällefahrt mehr stattfindet, folgt ein Ausgeben einer den ursprünglichen Betriebszustand des Fahrzeuggenerators wiederherstellenden Stellgröße. Dadurch ist sichergestellt, daß nach Beendigung der Gefällefahrt die bremsende Wirkung des Fahrzeuggenerators wieder aufgehoben wird.

Vor dem Ermitteln der Stellgröße für den Fahrzeuggenerator kann eine zu erreichende Zielmotordrehzahl ermittelt werden, wenn die Prüfung ergibt, daß eine Gefällefahrt stattfindet. Das Ermitteln der Stellgröße erfolgt dann derart, daß diese geeignet ist, den Generator in einen Betriebszustand zu versetzen, welcher bei dem mit dem Fahrzeuggenerator in Verbindung stehenden Motor zu einem Betriebszustand mit der Zielmotordrehzahl führt. Auf diese Weise läßt sich die Motordrehzahl und damit die Bremswirkung an die aktuelle Fahrsituation anpassen. Beispielsweise kann bei einem steilen Gefälle eine höhere Bremswirkung als bei einem weniger steilen Gefälle erwünscht sein. Zum Ermitteln der Zielmotordrehzahl kann beispielsweise der eingelegte Gang erfaßt werden. Als Zielmotordrehzahl kann dann etwa die für den eingelegten Gang optimale Drehzahl herangezogen werden.

In einer Erweiterung des erfindungsgemäßen Verfahrens erfolgt ein Prüfen, ob eine Steigfahrt des Fahrzeuges stattfindet. Wenn die Prüfung ergibt, daß eine Steigfahrt stattfindet, erfolgt ein Ermitteln einer Stellgröße für den Fahrzeuggenerator, die geeignet ist, den Generator in einen Betriebszustand zu versetzen, in welchem der Anteil an in elektrische Leistung umgewandelter Motorleistung gegenüber dem gewöhnlichen Betriebszustand, also dem Betriebszustand bei Fahrt auf einer ebenen Strecke, reduziert ist. Diese Stellgröße wird schließlich an den Fahrzeuggenerator ausgegeben. Dadurch kann die Anzugskraft, die zum Bergaufstieg an den Reifen zur Verfügung steht, maximiert werden.

Wenn das Fahrzeug, wie allgemein üblich, einen Energiespeicher zum Speichern von aus der vom Fahrzeuggenerator umgewandelten Motorleistung resultierender elektrischer Energie umfaßt (beispielsweise Fahrzeugbatterie), kann anhand einer Positionsbestimmung des Fahrzeuges und eines Vergleichs der Fahrzeugposition mit Kartenmaterial der Verlauf der Steigfahrt vorab ermittelt und die Stellgröße für den Fall einer Steigfahrt derart festgelegt werden, daß der Energiespeicher nach Abschluß der Steigfahrt weitgehend entleert ist. Weitgehend entleert soll hierbei bedeuten, daß beispielsweise die Fahrzeugbatterie auf das minimale Niveau entleert wird, bei dem die Funktion der Bordelektronik des Fahrzeuges bzw. das Anlassen des Motors noch sichergestellt werden können. Mit dieser Ausgestaltung des erfindungsgemäßen Verfahrens kann einerseits die Steigfahrt des Fahrzeugs verbessert werden und andererseits sichergestellt werden, daß im Energiespeicher nach Abschluß der Steigfahrt eine große Aufnahmekapazität für die bei anschließender Gefällefahrt vom Fahrzeuggenerator erzeugte Energie zur Verfügung steht. Auf diese Weise kann sichergestellt werden, daß auch bei längeren Gefällefahrten genügend Kapazität zum Aufnehmen der erzeugten elektrischen Energie zur Verfügung steht.

Eine erfindungsgemäße Bremsvorrichtung für ein Fahrzeug umfaßt eine Signaleingangseinheit zum Empfang mindestens eines von einem Fahrzeugparametersensor zur Verfügung gestellten und zur Identifikation einer Gefällefahrt geeigneten Fahrzeugparameters sowie eine Signalausgangseinheit zum Ausgeben wenigstens einer Stellgröße an einem Fahrzeuggenerator, der mit dem Fahrzeugmotor des Fahrzeugs zum Umwandeln eines Teils der Motorleistung in elektrische Leistung in Verbindung steht. Zudem umfaßt die erfindungsgemäße Bremsvorrichtung eine mit der Signaleingangseinheit und der Signalausgangseinheit in Verbindung stehende Steuereinheit, die zum Ermitteln der Stellgröße in Abhängigkeit von dem mindestens einen Fahrzeugparameter ausgestaltet ist. Die Steuereinheit ist dabei zum Ermitteln der Stellgröße derart ausgestaltet, daß die ermittelte Stellgröße geeignet ist, den Fahrzeuggenerator in einen Betriebszustand zu versetzen, welcher bei dem mit dem Fahrzeuggenerator in Verbindung stehenden Fahrzeugmotor zu einem Betriebszustand mit einer konstanten Motordrehzahl führt.

Die erfindungsgemäße Bremsvorrichtung eignet sich zum Durchführen des erfindungsgemäßen Verfahrens und ermöglicht so die Realisierung der mit dem erfindungsgemäßen Verfahren zu erzielenden Vorteile in einem Fahrzeug.

In einer Weiterbildung der erfindungsgemäßen Bremsvorrichtung ist die Signaleingangseinheit außerdem zum Empfang einer eine Zielmotordrehzahl repräsentierenden Sollgröße ausgestaltet. Dadurch können der Bremsvorrichtung je nach Bedarf unterschiedliche Zielmotordrehzahlen zugeführt werden.

Ein erfindungsgemäßes Fahrzeug umfaßt einen Motor, wenigstens einen Fahrzeugparametersensor zum Erfassen mindestens eines zur Identifikation einer Gefällefahrt geeigneten Fahrzeugparameters und einen mit dem Fahrzeugmotor zum Umwandeln eines Teils der Motorleistung in elektrische Leistung in Verbindung stehenden Fahrzeuggenerator. Das erfindungsgemäße Fahrzeug umfaßt außerdem eine erfindungsgemäße Bremsvorrichtung. Im erfindungsgemäßen Fahrzeug ist die Signaleingangseinheit der erfindungsgemäßen Bremsvorrichtung mit wenigstens einem der Fahrzeugparametersensoren zum Empfang eines Fahrzeugparameters verbunden. Außerdem ist der Fahrzeuggenerator zum Empfang des Stellsignals mit der Signalausgabeeinheit der erfindungsgemäßen Bremsvorrichtung verbunden. Als Fahrzeugparametersensor kann hierbei wenigstens einer der folgenden Sensoren dienen: Motordrehzahlsensor, Fahrzeuggeschwindigkeitssensor, Drosselklappenpositionssensor, Bremspedalstellungssensor, Getriebeübersetzungssensor.

Wenn das Fahrzeug einen Gangsensor zum Ermitteln des eingelegten Ganges umfaßt und dieser mit der Signaleingangseinheit zur Ausgabe einer einen eingelegten Gang repräsentierenden Größe als die die Zielmotordrehzahl repräsentierende Sollgröße verbunden ist, kann die Motordrehzahl bei einer Gefällefahrt in Abhängigkeit von eingelegtem Gang eingestellt werden.

In einer weiteren Ausgestaltung kann das Fahrzeug neben einem Energiespeicher, beispielsweise der Fahrzeugbatterie, einen zum Energiespeicher parallel geschalteten Hilfsenergiespeicher, beispielsweise einen Kondensator, umfassen. Der Hilfsenergiespeicher ermöglicht es, daß selbst dann, wenn der Energiespeicher vollständig aufgefüllt ist, weiter vom Fahrzeuggenerator abgegebene Energie gespeichert werden kann.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Fig. 1 zeigt ein Blockschaltbild der erfindungsgemäßen Bremsvorrichtung und ausgewählter Fahrzeugteile.

Fig. 2 zeigt ein Diagramm zum Verdeutlichen des erfindungsgemäßen Verfahrens.

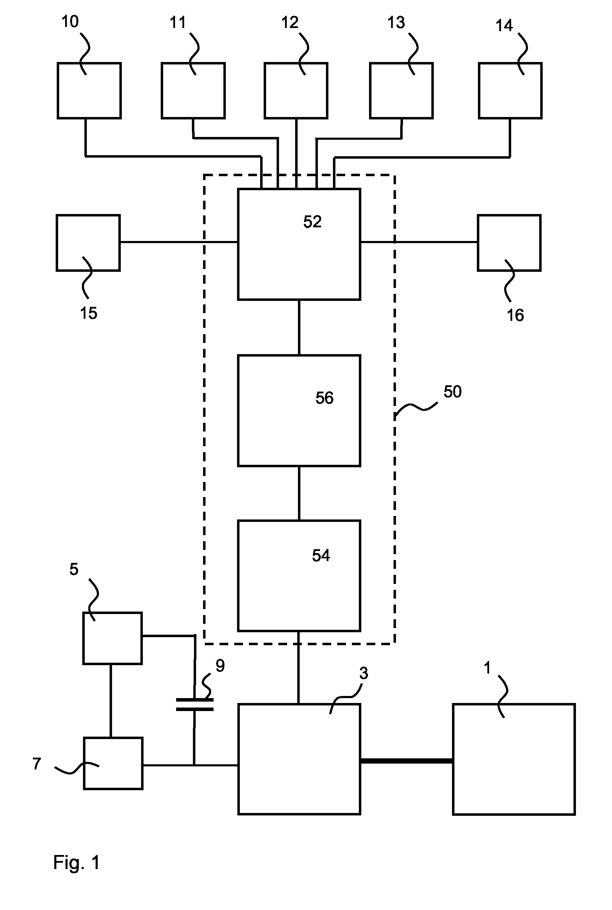

Fig. 1 zeigt in einem schematisierten Blockschaltbild Komponenten eines Fahrzeugs in Verbindung mit einer erfindungsgemäßen Bremsvorrichtung. Vom Fahrzeug sind der Übersichtlichkeit halber nur solche Elemente dargestellt, die für das Erläutern der Bremsvorrichtung notwendig sind. Es versteht sich jedoch, daß das Fahrzeug auch alle anderen, in Fahrzeugen üblicherweise vorhandenen Komponenten umfaßt.

Das Fahrzeug ist mit einem Fahrzeugmotor 1, der insbesondere als Verbrennungsmotor ausgestaltet sie kann, zum Antreiben des Fahrzeugs ausgestattet. Zum Umwandeln eines Teils der Motorleistung in elektrische Leistung weist das Fahrzeug außerdem einen Fahrzeuggenerator 3 auf. Dieser umfaßt im vorliegenden Ausführungsbeispiel einen mit dem Motor 1 mechanisch gekoppelten magnetischen Rotor und einen den Rotor umgebenden Läufer mit einer Spulenwicklung. Die mechanische Kopplung des Rotors an den Fahrzeugmotor, die beispielsweise über eine Welle erfolgen kann, dient dazu, die vom Motor zur Verfügung gestellte Drehbewegung auf den Rotor zu übertragen. Die Umwandlung der mechanischen Leistung in elektrische Leistung erfolgt dann durch Erregen von Strömen in der Spulenwicklung durch den rotierenden Rotor.

Der Fahrzeuggenerator 3 stellt die elektrische Leistung dann dem Bordnetz zur Verfügung, um die elektronischen Komponenten des Fahrzeugs betreiben zu können. Vom Bordnetz 5 nicht benötigte Leistung wird an eine Fahrzeugbatterie 7, die als Energiespeicher dient, abgegeben.

Das Fahrzeug umfaßt außerdem einen Fahrzeuggeschwindigkeitssensor 10 zum Ermitteln der Fahrzeuggeschwindigkeit, einen Motordrehzahlsensor 11 zum Ermitteln der Motordrehzahl, einen Drosselklappenstellungssensor 12 zum Ermitteln der Stellung der Drosselklappe des Fahrzeugs, einen Bremspedalstellungssensor 13 zum Ermitteln der Bremspedalstellung sowie einen Getriebeübersetzungssensor 14 zum Ermitteln der Getriebeübersetzung.

Das erfindungsgemäße Fahrzeug umfaßt eine erfindungsgemäße Bremsvorrichtung 50 mit einer Signaleingangseinheit 52, die mit den zuvor genannten Fahrzeugsensoren in Signalverbindung steht. Die Bremsvorrichtung 50 umfaßt außerdem eine Signalausgangseinheit 54, die mit dem Fahrzeuggenerator 3 in Signalverbindung steht. Schließlich umfaßt die Bremsvorrichtung eine Steuereinheit 56, die sowohl mit der Signaleingangseinheit 52 zum Empfang der eingehenden Signale sowie mit der Signalausgangseinheit 54 zur Ausgabe eines Stellsignals in Verbindung steht. Mit der Signaleingangseinheit 52 der Bremsvorrichtung 50 können außerdem ein Gangsensor 15 zum Ermitteln des eingelegten Ganges und eine Geschwindigkeitsregeleinheit 16 verbunden sein. Von der Geschwindigkeitsregeleinheit 16 kann die Signaleingangseinheit 52 ein die eingestellte Fahrzeuggeschwindigkeit repräsentierendes Signal empfangen.

Nachfolgend wird die Arbeitsweise der erfindungsgemäßen Bremsvorrichtung 50 beschrieben.

Die Bremsvorrichtung 50 dient dazu, bei einer Gefällefahrt ein Stellsignal an den Fahrzeuggenerator 3 auszugeben, welches diesen in einen Betriebszustand versetzt, der über die mechanische Kopplung beim Motor 1 zu einem Betriebszustand mit einer konstanten Motordrehzahl führt. Dies kann beispielsweise dadurch erreicht werden, daß von der Signalausgabeeinheit 54 der Bremsvorrichtung 50 ein Stellsignal an den Fahrzeuggenerator 3 ausgegeben wird, das einen zu Wirbelströmen im Rotor führenden Stromfluß durch die Wicklung des Stators herbeiführt. Die Wirbelströme wirken dann der Rotation des Rotors entgegen und erzeugen so ein Bremsmoment, welches über die mechanische Kopplung an den Fahrzeugmotor 1 übertragen wird.

Das an den Motor 1 übertragene Bremsmoment führt bei diesem zu einer bestimmten Motordrehzahl und wirkt einer Erhöhung der Motordrehzahl über die bestimmte Motordrehzahl hinaus entgegen, so daß eine Bremswirkung für das Fahrzeug eintritt. Die Drehzahl des Motors kann dabei über den Stromfluß durch die Windungen des Stators beeinflußt werden.

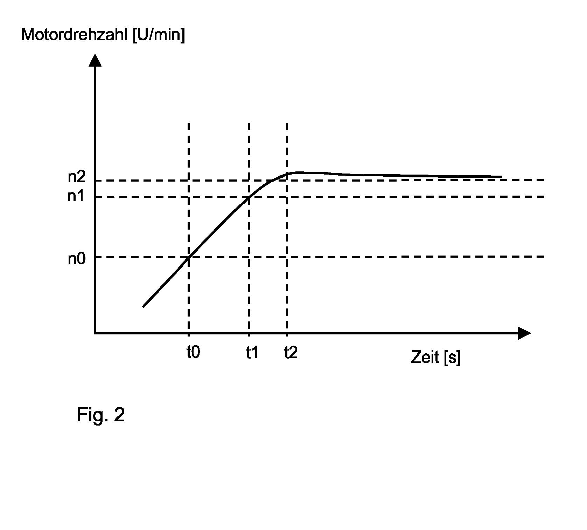

Die erfindungsgemäße Bremsvorrichtung dient als Dauerbremsvorrichtung für eine Gefällefahrt des Fahrzeugs. Wenn das das Bremsmoment verursachende Stellsignal an den Fahrzeuggenerator 3 ausgegeben wird, ist daher zuvor eine Gefällefahrt des Fahrzeugs festgestellt worden. Das Feststellen einer Gefällefahrt des Fahrzeugs erfolgt im vorliegenden Ausführungsbeispiel anhand wenigstens eines von den Sensoren 10 bis 14 zur Verfügung gestellten Fahrzeugparametersignals. Im vorliegenden Ausführungsbeispiel können entweder die Fahrzeuggeschwindigkeit, die Motordrehzahl, die Drosselklappenstellung, die Stellung des Bremspedals oder die Getriebeübersetzung alleine oder in Kombination herangezogen werden. Beispielsweise kann aus der Fahrzeuggeschwindigkeit in Verbindung mit der Drosselklappenkombination auf eine Gefällefahrt geschlossen werden. Ebenso eignet sich die Motordrehzahl als Parameter zum Feststellen einer Gefällefahrt. Dies soll anhand des in Fig. 2 dargestellten Diagramms kurz erläutert werden. Anhand des Drehzahlsensors werden Motordrehzahlen n₀ und n₁ zu verschiedenen Zeiten t₀, t₁ gemessen. Aus der Differenz der Motordrehzahlen und dem zeitlichen Abstand der Messpunkte kann eine Änderung der Motordrehzahl, man spricht in diesem Fall vom Gradienten der Motordrehzahl, ermittelt werden. Weist der Gradient einen Anstieg auf, welcher einen bestimmten Wert überschreitet, so stellt die Steuereinheit 56 eine Gefällefahrt fest. Der Schwellenwert, bei dem die Gefällefahrt festgestellt wird, sollte dabei so gewählt sein, daß er durch eine Betätigung des Gaspedals nicht erreicht werden kann.

Im vorliegenden Ausführungsbeispiel erfolgt das Feststellen einer Gefällefahrt anhand einer Kombination der von den Sensoren 10 bis 14 zur Verfügung gestellten Fahrzeugparameterdaten. Durch die Kombination kann die Eindeutigkeit beim Feststellen einer Gefällefahrt erhöht werden. Das Feststellen einer Gefällefahrt durch die Steuereinheit 56 kann beispielsweise erfolgen, wenn die folgenden Bedingungen in Kombinationen erfüllt sind.
1. Die Fahrzeuggeschwindigkeit überschreitet einen bestimmten Wert.
2. Das Bremspedal ist nicht betätigt.
3. Die Drosselklappenstellung beträgt null Grad,
4. Die Motordrehzahl steigt mit einer bestimmten Rate, die über einem vorgegebenen Stellenwert liegt, an.

Zur Interpretation dieser Parameter wird außerdem noch die Getriebeübersetzung herangezogen.

Es sei an dieser Stelle angemerkt, daß auch andere Sensoren als die im Ausführungsbeispiel beschriebenen zum Feststellen einer Gefällefahrt herangezogen werden können. Beispielsweise kann das Fahrzeug mit einem Neigungssensor ausgestattet werden, welcher die Fahrzeugneigung feststellt. Eine Gefällefahrt läßt sich dann beispielsweise feststellen, wenn die Fahrzeugneigung über einen bestimmten Zeitraum einen bestimmten Neigungsschwellenwert überschreitet.

Wenn in der beschriebenen Prozedur festgestellt wird, daß eine Gefällefahrt stattfindet, so veranlaßt die Steuereinheit 56 die Ausgabe des das Bremsmoment herbeiführenden Stellsignals über die Signalausgabeeinheit 54 an den Fahrzeuggenerator 3.

Die Motordrehzahl, die sich aufgrund des Bremsmomentes im Fahrzeugmotor 1 einstellen soll, im Folgenden Zieldrehzahl genannt, hängt dabei vom eingelegten Gang ab. Um eine die Zieldrehzahl repräsentierende Sollgröße zur Verfügung zu stellen, ist das Fahrzeug mit einem Gangsensor 15 ausgestattet, welcher ein den eingelegten Gang repräsentierendes Signal an die Signaleingabeeinheit 52 der Bremsvorrichtung 50 weiterleitet. Die für den eingelegten Gang optimale Motordrehzahl kann dann beispielsweise als Basis für die Sollgröße dienen, welche die im Fahrzeugmotor 1 zu erzielende Zieldrehzahl repräsentiert. Anhand dieser Sollgröße kann die Steuereinheit 56 ein entsprechendes Stellsignal für den Fahrzeuggenerator 3 ermitteln, welches zur zu erzielenden Motordrehzahl führt. Die Verknüpfung zwischen der Sollgröße und der Stellgröße kann in der Steuereinheit 56 entweder in Form einer Tabelle oder in Form einer funktionalen Beziehung vorliegen.

Die Sollgröße kann alternativ statt vom Gangsensor 15 auch von der Geschwindigkeitsregelanlage 16 zur Verfügung gestellt werden.

Das Feststellen, ob eine Gefällefahrt vorliegt, erfolgt im Ausführungsbeispiel in regelmäßigen zeitlichen Abständen. Wenn dabei festgestellt wird, daß keine Gefällefahrt mehr stattfindet, versetzt die Steuereinheit 56 den Fahrzeuggenerator 3 in seinen gewöhnlichen Betriebszustand zurück.

Beim Bremsen mittels Reibungsbremse oder Motorbremse wird die Bremsenergie im Wesentlichen in Wärme umgewandelt. Im erfindungsgemäßen Verfahren zum Bremsen eines Fahrzeugs bei einer Gefällefahrt erfolgt dagegen eine Umwandlung eines Großteils der Bremsenergie in nutzbare elektrische Energie. Diese elektrische Energie wird, soweit sie nicht vom Bordnetz 5 des Fahrzeugs verbraucht wird, zur Speicherung an die Batterie 7 weitergegeben. Bei langen Gefällefahrten kann es jedoch vorkommen, daß die Batterie nicht in der Lage ist, die gesamte aus der Bremsenergie resultierende elektrische Energie zu speichern. Um diese Situation zu vermeiden bieten sich drei Vorgehensweisen an. Zum einen kann, wie in Fig. 1 dargestellt, ein großer Kondensator 9 der Batterie 7 als Energiezwischenspeicher parallel geschaltet werden. Die zweite Möglichkeit besteht darin, dafür zu sorgen, daß die Batterie 7 vor Beginn der Gefällefahrt weitgehend entleert ist. Die Entleerung sollte hierbei jedoch nur soweit gehen, daß die elektrischen Funktionen des Fahrzeuges, inklusive des Wiederanlassens des Motors, auch weiterhin gewährleistet werden können. Die dritte Möglichkeit besteht darin, zusätzliche große Verbraucher, wie z. B. die beheizbare Windschutzscheibe einzuschalten.

Die Möglichkeit des Entleerens der Batterie 7 bietet sich beispielsweise dann an, wenn der Gefällefahrt eine Steigfahrt vorangeht, wie dies bspw. beim Überqueren von Pässen der Fall ist. Das Feststellen einer Steigfahrt kann dabei in ähnlicher Weise anhand der von den Sensoren 10 bis 14 zur Verfügung gestellten Parameter erfolgen, wie das Feststellen der Gefällefahrt. Wenn zusätzlich die Position des Fahrzeugs ermittelt wird, beispielsweise mittels des Globalen Positionierungssystems (GPS, Global Positioning System), kann die Steuereinheit 56 aus einem Vergleich der Position des Fahrzeugs mit einer Karte auf die Dauer der Steigfahrt schließen. Aus der vom Bordnetz benötigten elektrischen Leistung kann die Steuereinheit 56 zudem die bis zum Abschluß des Aufstiegs benötigte elektrische Energie ermitteln. Aus dieser Kenntnis heraus kann der Fahrzeuggenerator 3 während der Steigfahrt mittels eines Stellsignals in einen Betriebszustand versetzt werden, in dem die Umwandlung von mechanischer Leistung in elektrische Leistung reduziert oder im Extremfall sogar ganz eingestellt ist. Der Grad der Reduktion hängt dabei davon ab, wie viel Energie die Batterie 7 liefern kann, bis die minimal benötigte Batterieladung erreicht ist. So kann sichergestellt werden, daß die Batterie zu Beginn der Gefällefahrt maximal entladen ist und eine große Kapazität zur Aufnahme von aus dem Bremsvorgang resultierender elektrischer Energie bietet.

Falls bei einer Gefällefahrt die Motordrehzahl weiter steigt, obwohl der Generator 3 bereits das maximal mögliche Bremsmoment zur Verfügung stellt, muß der Fahrer des Fahrzeuges auch bei Vorhandensein der erfindungsgemäßen Bremsvorrichtung noch immer zurückschalten oder die Reibungsbremsen des Fahrzeuges parallel zur erfindungsgemäßem Bremsvorrichtung benutzen. Dennoch wird durch die erfindungsgemäße Bremsvorrichtung 50 der Gebrauch der Reibungsbremse aufgrund des vom Generator 3 zur Verfügung gestellten Bremsmomentes reduziert, was die Bremsbeläge und die Bremsscheiben schont.

Gegenüber dem Bremsverfahren nach Stand der Technik bietet das erfindungsgemäße Verfahren zum Bremsen eines Fahrzeugs bei einer Gefällefahrt den Vorteil, daß die Bremsenergie nicht nutzlos in Form von Wärme verloren geht sondern in nützliche elektrische Energie umgewandelt wird. Außerdem ist das erfindungsgemäße Verfahren in der Lage eine konstante Motordrehzahl herbeizuführen und ist zudem vollständig steuerbar.

Die erfindungsgemäße Bremsvorrichtung kann in Fahrzeugen jeglicher Größe eingesetzt werden. Insbesondere ist es auch möglich, daß erfindungsgemäße Bremssystem in Personenkraftwagen einzusetzen, die nicht den für den Einbau von Dauer-Bremsanlagen nach Stand der Technik benötigten Bauraum zur Verfügung stellen. Bei Nutzfahrzeugen kann die erfindungsgemäße Bremsvorrichtung dazu verwendet werden, eine Geschwindigkeitssteuerung in Kombination mit großen elektrischen Retardern zur Verfügung zu stellen.

Die erfindungsgemäße Bremsvorrichtung erleichtert das Fahren eines Fahrzeugs in einem Gefälle und ermöglicht zudem den gleichzeitigen Gebrauch einer Geschwindigkeitsregelanlage.

Die Erfindung ist nicht auf die Verwendung bei Fahrzeugen mit Verbrennungsmotoren beschränkt. Sie kann ebenso in Fahrzeugen mit Hybridmotoren oder elektrischen Motoren Verwendung finden.

## Patentansprüche

1. Verfahren zum Bremsen eines Fahrzeuges, welches mit einem Fahrzeugmotor (1) und einem mit dem Fahrzeugmotor (1) zum Umwandeln eines Teils der Motorleistung in elektrische Leistung in Verbindung stehenden steuerbaren Fahrzeuggenerator (3) ausgestattet ist, bei einer Gefällefahrt mit den Schritten:
- Prüfen, ob eine Gefällefahrt stattfindet;
- Ermitteln einer Stellgröße für den Fahrzeuggenerator (3), die geeignet ist, den Fahrzeuggenerator (3) in einen Betriebszustand zu versetzen, welcher bei dem mit dem Fahrzeuggenerator (3) in Verbindung stehenden Fahrzeugmotor (1) zu einem Betriebszustand mit einer konstanten Motordrehzahl führt, wenn die Prüfung ergibt, daß eine Gefällefahrt stattfindet; und
- Ausgeben der ermittelten Stellgröße an den Fahrzeuggenerator (3).

2. Verfahren nach Anspruch 1 für ein Fahrzeug, welches mit wenigstens einem zum Erfassen eines zur Identifikation einer Gefällefahrt geeigneten Fahrzeugparameters ausgebildeten Fahrzeugparametersensor (10-14) ausgestattet ist, bei dem zum Prüfen, ob eine Gefällefahrt stattfindet, eine Prüfung dahingehend erfolgt, ob der von dem wenigstens einen Fahrzeugparametersensor (10-14) erfaßte Fahrzeugparameter zur Identifikation einer Gefällefahrt führt.

3. Verfahren nach Anspruch 2, bei dem als die Identifikation einer Gefällefahrt ermöglichender Fahrzeugparameter einer oder mehrere der der folgenden Fahrzeugparameter alleine oder in Kombination Verwendung findet bzw. finden: Fahrzeuggeschwindigkeit, Motordrehzahl, Drosselklappenstellung, Bremspedalstellung, Getriebeübersetzung.

4. Verfahren nach einem der Ansprüche 1 bis 3, bei dem das Prüfen, ob eine Gefällefahrt stattfindet, wiederholt erfolgt und, wenn die Prüfung ergibt, daß keine Gefällefahrt mehr stattfindet, ein Ausgeben einer den ursprünglichen Betriebszustand des Fahrzeuggenerators (3) wiederherstellende Stellgröße erfolgt.

5. Verfahren nach einem der vorangehenden Ansprüche, bei dem, wenn die Prüfung ergibt, daß eine Gefällefahrt stattfindet,
- vor dem Ermitteln der Stellgröße für den Fahrzeuggenerator (3) eine zu erreichende Zielmotordrehzahl ermittelt wird; und
- das Ermitteln der Stellgröße derart erfolgt, daß diese geeignet ist, den Fahrzeuggenerator (3) in einen Betriebszustand zu versetzen, welcher bei dem mit dem Fahrzeuggenerator (3) in Verbindung stehenden Fahrzeugmotor (1) zu einem Betriebszustand mit der Zielmotordrehzahl führt.

6. Verfahren nach Anspruch 5, bei dem zum Ermitteln der Zielmotordrehzahl der eingelegte Gang erfaßt wird.

7. Verfahren nach einem der vorangehenden Ansprüche, mit den zusätzlichen Schritten:
- Prüfen, ob eine Steigfahrt des Fahrzeuges stattfindet,
- Ermitteln einer Stellgröße für den Fahrzeuggenerator (3), die geeignet ist, den Fahrzeuggenerator (3) in einen Betriebszustand zu versetzen, in welchem der Anteil an in elektrische Leistung umgewandelter Motorleistung gegenüber dem gewöhnlichen Betriebszustand reduziert ist, wenn die Prüfung ergibt, daß eine Steigfahrt stattfindet; und
- Ausgeben der ermittelten Stellgröße an den Fahrzeuggenerator (3).

8. Verfahren nach Anspruch 7, bei dem das Fahrzeug einen Energiespeicher (7) zum Speichern von aus der vom Fahrzeuggenerator (3) umgewandelten Motorleistung resultierender elektrischer Energie umfaßt und bei dem anhand einer Positionsbestimmung des Fahrzeuges und eines Vergleichs der Fahrzeugposition mit Kartenmaterial die Stellgröße für den Fall einer Steigfahrt derart ermittelt wird, daß der Energiespeicher (7) nach Abschluß der Steigfahrt weitgehend entleert ist.

9. Bremsvorrichtung für ein Fahrzeug mit:
- einer Signaleingangseinheit (52) zum Empfang mindestens eines von einem Fahrzeugparametersensor (10-14) zur Verfügung gestellten und zur Identifikation einer Gefällefahrt geeigneten Fahrzeugparameters;
- einer Signalausgangseinheit (54) zum Ausgeben wenigstens einer Stellgröße an einen Fahrzeuggenerator (3), der mit dem Fahrzeugmotor (1) des Fahrzeuges zum Umwandeln eines Teils der Motorleistung in elektrische Leistung in Verbindung steht; und
- einer mit der Signaleingangseinheit (52) und der Signalausgangseinheit (54) in Verbindung stehenden Steuereinheit (56), die zum Ermitteln der Stellgröße in Abhängigkeit von dem mindestens einen Fahrzeugparameter ausgestaltet ist;
wobei
- die Steuereinheit (56) zum Ermitteln der Stellgröße derart ausgestaltet ist, daß die ermittelte Stellgröße geeignet ist, den Fahrzeuggenerator (3) in einen Betriebszustand zu versetzen, welcher bei dem mit dem Fahrzeuggenerator (3) in Verbindung stehenden Fahrzeugmotor (1) zu einem Betriebszustand mit einer konstanten Motordrehzahl führt.

10. Bremsvorrichtung nach Anspruch 9, bei der die Signaleingangseinheit zum Empfang einer eine Zielmotordrehzahl repräsentierenden Sollgröße ausgestaltet ist.

11. Bremsvorrichtung nach Anspruch 9 oder 10, bei der die Signaleingangseinheit (52) außerdem zum Empfang mindestens eines von einem Fahrzeugparametersensor (10-14) zur Verfügung gestellten und zur Identifikation einer Steigfahrt geeigneten Fahrzeugparameter ausgebildet ist und die Steuereinheit (56) zum Ermitteln einer Stellgröße derart ausgestaltet ist, daß diese geeignet ist, den Fahrzeuggenerator (3) in einen Betriebszustand zu versetzen, in welchem der Anteil an in elektrischer Leistung umgewandelter Motorleistung gegenüber dem gewöhnlichen Betriebszustand reduziert ist.

12. Fahrzeug mit
- einem Fahrzeugmotor (1)
- wenigstens einem Fahrzeugparametersensor (10-14) zum Erfassen mindestens eines zur Identifikation einer Gefällefahrt geeigneten Fahrzeugparameters und
- einem mit dem Fahrzeugmotor (1) zum Umwandeln eines Teils der Motorleistung in elektrische Leistung in Verbindung stehenden Fahrzeuggenerator (3),
**dadurch gekennzeichnet,**
- **daß** eine Bremsvorrichtung (50) nach eine der Ansprüche 9 bis 11 vorhanden ist,
- **daß** die Signaleingangseinheit (52) der Bremsvorrichtung (50) mit wenigstens einem der Fahrzeugparametersensoren (10-14) zum Empfang eines Fahrzeugparameters in Verbindung steht und
- **daß** der Fahrzeuggenerator (3) zum Empfang des Stellsignals mit der Signalausgabeeinheit (54) der Bremsvorrichtung (50) in Verbindung steht.

13. Fahrzeug nach Anspruch 12, **dadurch gekennzeichnet, daß** als Fahrzeugparametersensor wenigstens einer der folgenden Sensoren vorhanden ist: Motordrehzahlsensor (11), Fahrzeuggeschwindigkeitssensor (10), Drosselklappenpositionssensor (12), Bremspedalstellungssensor (13), Getriebeübersetzungssensor (14).

14. Fahrzeug nach Anspruch 12 oder 13, **gekennzeichnet durch** einen Gangsensor (15) zum Ermitteln des eingelegten Ganges, welcher mit der Signaleingangseinheit (52) zur Ausgabe einer einen eingelegten Gang repräsentierenden Größe als eine die Zielmotordrehzahl repräsentierende Sollgröße verbunden ist.

15. Fahrzeug nach einem der Ansprüche 12 bis 14, **dadurch gekennzeichnet, daß** es neben einem Energiespeicher (7) einen dazu parallel geschalteten Hilfsenergiespeicher (9) umfaßt.

16. Fahrzeug nach Anspruch 15, **dadurch gekennzeichnet, daß** der Hilfsenergiespeicher ein Kondensator (9) ist.
